## Europäisches Patentamt

## European Patent Office

## Office européen des brevets

(19)

(11) Veröffentlichungsnummer: **0 053 674**
B1

(12)

# EUROPÄISCHE PATENTSCHRIFT

(45) Veröffentlichungstag der Patentschrift:
05.02.86

(51) Int. Cl.⁴: **H 04 B 9/00**, H 04 Q 11/04

(21) Anmeldenummer: **81108253.6**

(22) Anmeldetag: **13.10.81**

(54) **Dienstintegriertes, digitales Übertragungssystem.**

(30) Priorität: **05.12.80 DE 3045876**

(43) Veröffentlichungstag der Anmeldung:
**16.06.82 Patentblatt 82/24**

(45) Bekanntmachung des Hinweises auf die Patenterteilung:
**05.02.86 Patentblatt 86/6**

(84) Benannte Vertragsstaaten:
**AT CH DE FR GB LI NL SE**

(56) Entgegenhaltungen:
NTG-FACHBERICHTE, THE INTERNATIONAL
SYMPOSIUM ON SUBSCRIBER LOOPS AND
SERVICES, 15.-19. September 1980, Seiten 46-50,
München, Berlin, DE., M. WELZENBACH et al.: "The
application of optical systems for cable TV"
NTG-FACHBERICHTE, THE INTERNATIONAL
SYMPOSIUM ON SUBSCRIBER LOOPS AND
SERVICES, 15.-19. September 1980, Seiten 51-55,
München, Berlin, DE., S. SENMOTO et al.: "A fiber
optics application to subscriber loops"
WISSENSCHAFTLICHE BERICHTE AEG-TELEFUNKEN,
Band 53, Nr. 1-2. 26. September 1980, Seiten 72-79,
Berlin, DE., H. SCHÜSSLER: "Dienstintegrierter
Teilnehmeranschluss mit Lichtwellenleitern"
THE INTERNATIONAL SYMPOSIUM ON SUBSCRIBER
LOOPS AND SERVICES, 20.-24. März 1978, Seiten 39-43,

(73) Patentinhaber: **AEG - TELEFUNKEN Nachrichtentechnik
GmbH, Gerberstrasse 33, D-7150 Backnang (DE)**

(72) Erfinder: **Schenkel, Klaus Dieter, Dr.-Ing., Im Törle 9,
D-7155 Oppenweiler (DE)**
Erfinder: **Welzenbach, Manfred, Dr.-Ing., Lutherweg 39,
D-7150 Backnang (DE)**

(74) Vertreter: **Schickle, Gerhard, Dipl.-Ing.,
AEG-TELEFUNKEN Nachrichtentechnik GmbH
K1 E7 Gerberstrasse 33, D-7150 Backnang (DE)**

(56) Entgegenhaltungen: (Fortsetzung)
Atlanta, New York, U.S.A., B.S. HELLIWELL et al.:
"Optical fibre transmission developments and the local
loop"
PROCEEDINGS OF THE IEEE, Band 68, Nr. 10, Oktober
1980, Seiten 1291-1299, New York, U.S.A., K.Y. CHANG:
"Fiberguide systems in the subscriber loop"

**Beschreibung**

Die Erfindung betrifft ein dienstintegriertes, digitales System mit Einrichtungen zur Übertragung von Schmal- und Breitbandsignalen.

Ein solches System ist durch die am 09.06.1982 offengelegte EP-A-53238 bekannt geworden. Dieser Anmeldung lag die Aufgabe zugrunde, ein dienstintegriertes, digitales im Zeitmultiplex arbeitendes System mit Einrichtungen zur Übertragung von Schmal- und Breitbandsignalen zwischen einem Teilnehmer und einer Zentrale, wobei sendeseitig die Schmal- bzw. Breitbandsignale durch Multiplexer zusammengefaßt, über ein Lichtwellenleitersystem übertragen und empfangsseitig durch Demultiplexer die Schmal- und Breitbandsignale zurückgewonnen werden, anzugeben, bei dem die Stromversorgung nicht amtsseitig erfolgt, das jedoch trotzdem eine hohe Verfügbarkeit aufweist, wobei das Übertragungssystem in möglichst unaufwendiger und energiesparender Weise ausgeführt sein sollte.

Der vorliegenden Anmeldung lag die Aufgabe zugrunde, für ein System der eingangs genannten Art, eine besonders günstige Variante anzugeben, die sehr unaufwendig und energiesparend ist.

Die Lösung erfolgt gemäß den Merkmalen des Hauptanspruchs.

In dem Aufsatz 'Der Einsatz von optischen Systemen in Breitbandverteilanlagen' von Manfred Welzenbach und Bernhard Wiest in Wissenschaftliche Berichte AEG-Telefunken 53 (1980) 1-2 Seite 62 bis 71 ist in Figur 19 und zugehöriger Beschreibung ein Teilnehmeranschluß mit zwei Lichtwellenleitern für Breitbandverteilung und zusätzliche Schmal- und Breitbanddienste im Wellenlängen-Multiplex vorgeschlagen worden, wobei Breit- und Schmalbandsignale ebenfalls jeweils in einem getrennten optischen Kanal übertragen werden, wobei aber die Probleme der Stromversorgung nicht diskutiert wurden.

Durch den Aufsatz 'Fiberguide systems in the subscriber loop' von K.Y. Chang in Proceedings of the IEEE, Vol. 68, No. 10, Oktober 1980, ist ein optisches Kommunikationsnetz im Sternform bekanntgeworden, in dem zwei Fasern pro Teilnehmeranschluß verwendet und auf der einen Faser alle Signale in Senderichtung und auf der anderen Faser alle Signale in Empfangsrichtung übertragen werden (Figur 3 und 4). Aus Figur 5 ist ein solches Netz mit nur einer Faser mit Wellenlängenmultiplex zu entnehmen, wobei jedoch auch hier jeweils alle Signale in Hin- und Rückrichtung durch Multiplexer zusammengefaßt werden. Beide Systemvorschläge beziehen sich auf analoge Signalübertragung. Die Teilnehmereinrichtungen werden vom Stromnetz versorgt. Um wichtige Dienste wie Telefon und Alarmsignalisierung auch bei Netzausfall zu ermöglichen, wird eine Pufferbatterie bzw. ein metallisches Leiterpaar in der Teilnehmerleitung zur Versorgung derjenigen Teilnehmerbaugruppen vorgeschlagen, deren Betrieb hierfür erforderlich ist.

Das erfindungsgemäße Übertragungssystem weist die Vorteile auf, daß aufgrund der Trennung von Schmal- und Breitbandwegen besondere Umschaltmittel zur Umschaltung auf reinen Schmalbandbetrieb bei Netzausfall nicht benötigt werden und die Verfügbarkeit des Systems erhöht wird.

Die Trennung von Breit- und Schmalbandsignal-Übertragung kann durch einen Lichtwellenleiter in Raum-, Wellenlängen-, Zeit- (Burstverfahren) bzw. im Richtungsmultiplex oder nach Kombinationen der vorgenannten Verfahren betrieben werden. Sehr wirtschaftlich und energiesparend ist es, nur für den optischen Kanal der Breitbandsignal-Übertragung eine Laserdiode und für denjenigen der Schmalbandsignale eine lichtemittierende Diode vorzusehen, wobei letztere den Leistungsanforderungen des Schmalbandbetriebs durchaus genügt, dabei aber wesentlich weniger Strom aufnimmt sowie eine wesentlich höhere Zuverlässigkeit als die Laserdiode aufweist.

Es folgt die Beschreibung der Erfindung anhand der Figuren.

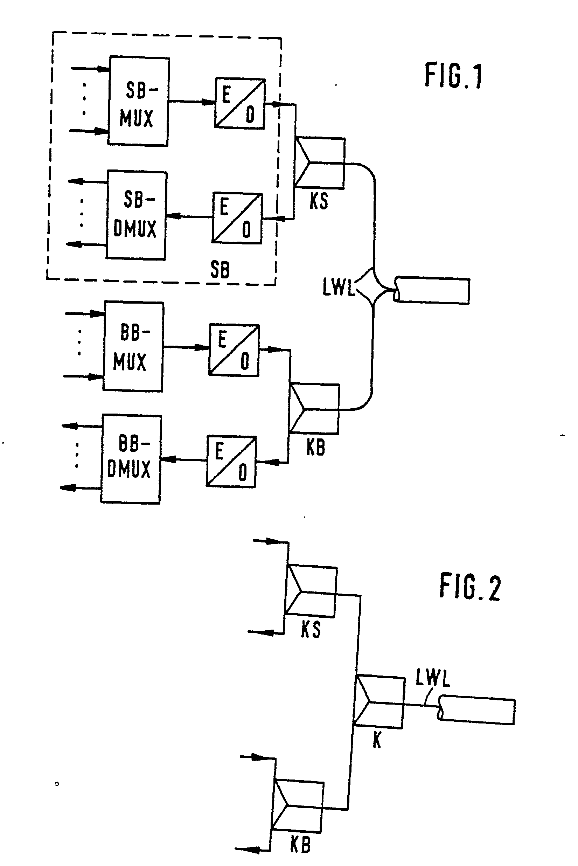

Fig. 1 zeigt die teilnehmerseitigen Übertragungseinrichtungen für Schmal- und Breitbandsignal-Übertragung, wobei beide Signalarten jeweils über Multiplexer SB-MUX bzw. BB-MUX auf ihnen zugeordnete elektro-optische Wandler E/O gegeben werden. Für beide Signalarten ist jeweils ein eigener Lichtwellenleiter LWL vorgesehen. Für die Rückrichtung der Übertragung werden jeweils dieselben Lichtwellenleiter benutzt, wobei jeweils ein Richtungskoppler KS und KB eingesetzt ist. Die optischen Empfangssignale werden wiederum auf die optischen Empfänger O/E gegeben, deren elektrisches Ausgangssignal durch die Demultiplexer SB-DMUX und BB-DMUX in die einzelnen Schmal- bzw. Breitbandkanäle aufgeteilt werden.

Durch die getrennte Übertragung der Schmalbanddienste über den eigenen optischen Kanal wird eine getrennte Stromversorgung ermöglicht. Bei Netzausfall werden nur die mit SB gekennzeichneten strichliert umrahmten Baugruppen im linken oberen Teil der Figur 1 zur Aufrechterhaltung der Schmalbanddienste aus einer Pufferbatterie mit Strom versorgt. Die getrennte Übertragung hat den weiteren Vorteil, daß Schmalband-Multiplexer und Demultiplexer entsprechend der niederen Übertragungsgeschwindigkeiten wesentlich stromsparender ausgelegt werden können, als diejenigen Baugruppen für die hohen Übertragungsgeschwindigkeiten der Breitbanddienste.

In Fig. 2 sind die teilnehmerseitigen optischen Einrichtungen (ohne Umsetzer) in einer Ausgestaltung der Erfindung mit einem einzigen Lichtwellenleiter gezeichnet, wobei zusätzlich zu den Richtungskopplern KS und KB ein weiterer Richtungskoppler K vorgesehen ist, der die Schmalund Breitband-Multiplexsignale in Senderichtung zusammenfaßt und in Empfangsrichtung auftrennt.

**0 053 674**

## Patentansprüche

1. Dienstintegriertes, digitales System mit Einrichtungen zur Übertragung von Schmal- und Breitbandsignalen zwischen einem Teilnehmer und einer Zentrale, wobei sendeseitig die einzelnen Schmal- und Breitbandsignale jeweils durch im Zeitmultiplex arbeitende Multiplexer (SB-MUX, BB-MUX) zusammengefaßt, über ein Lichtwellenleitersystem (E/O, LWL, O/E) übertragen und empfangsseitig durch Demultiplexer (SB-DMUX, BB-DMUX) die Schmalund Breitbandsignale zurückgewonnen werden und wobei die teilnehmerseitigen Einrichtungen, die durch das Netz mit Strom versorgt werden, einen Ladungsspeicher aufweisen, der bei Netzausfall die Stromversorgung übernimmt, und wobei bei Netzausfall die Einrichtungen derart umschaltbar sind, daß die Übertragung über das Lichtwellenleitersystem (LWL) mit verminderter Gesamtbitrate erfolgt, mit Zweirichtungsübertragung, wobei für die Übertragung der zusammengefaßten Schmal- und Breitbandsignale in dem Lichtwellenleitersystem jeweils ein separater optischer Übertragungskanal vorgesehen ist, wobei die optischen Sende- und Empfangssignale bei Schmalund Breitbandübertragung jeweils über einen Richtungskoppler (KS, KB) zusammengefaßt bzw. wieder aufgetrennt werden und

wobei die optischen Übertragungskanäle sendeseitig für die Breitbandsignale eine Laserdiode und für die Schmalbandsignale eine lichtemittierende Diode aufweisen.

2. Übertragungssystem nach Anspruch 1, dadurch gekennzeichnet, daß als optische Übertragungskanäle jeweils ein Lichtwellenleiter (LWL) eingesetzt ist (Figur 1).

3. Übertragungssystem nach Anspruch 1 dadurch gekennzeichnet, daß ein einziger Lichtwellenleiter für die optischen Übertragungskanäle vorgesehen ist und daß Breit- und Schmalbandsignale über einen weiteren Bichtkoppler (K) zusammengefaßt bzw. wieder aufgetrennt werden (Figur 2).

4. Übertragungssystem nach Anspruch 1, 2 oder 3 dadurch gekennzeichnet, daß der Lichtwellenleiter (LWL) im Wellenlängen-Multiplex betrieben wird.

5. Übertragungssystem nach Anspruch 1, 2 oder 3 dadurch gekennzeichnet, daß der Lichtwellenleiter (LWL) im Burstverfahren betrieben wird.

## Claims

1. Service-integrated digital system with equipments for the transmission of narrow and wide band signals between a subscriber and an exchange, wherein the individual narrow and wide band signals are each time combined at the transmitter end by multiplexers (SB-MUX, BB-MUX) operating in time multiplex, transmitted through a light wave conductor system (E/O, LWL, O/E) and the narrow and wide band signals are regained at the receiver end by demultiplexers (SB-OMUX, BB-OMUX) and wherein the equipments, which are at the subscriber end and supplied with current through the mains, display a charge storage device which on failure of the mains takes over the current supply and wherein the equipments are on failure of the mains switchable over in such a manner that the transmission by way of the light wave conductor system (LWL) takes place at reduced total bit rate, with bidirectional transmission, wherein a respective separate optical transmission channel is provided in the light wave conductor system for the transmission of the combined narrow and wide band signals, wherein the optical transmitted and received signals in narrow and wide band transmission are each time combined or again separated through a directional coupler (KS, KB) and wherein the optical transmission channels at the transmitter end display a Laser diode for the wide band signals and a light-emitting diode for the narrow band signals.

2. Transmission system according to claim 1, characterised thereby, that a respective light wave conductor (LWL) is used for each of the optical transmission channels (Figure 1).

3. Transmission system according to claim 1, characterised thereby, that a single light wave conductor is provided for the optical transmission channels and that narrow and wide band signals are combined or again separated through a further directional coupler (K) (Figure 2).

4. Transmission system according to claim 1, 2 or 3, characterised thereby, that the light wave conductor (LWL) is operated in wavelength multiplex.

5. Transmission system according to claim 1, 2 or 3, characterised thereby, that the light wave conductor (LWL) is operated by the burst method.

## Revendications

1. Système numérique à intégration de services, comprenant des équipements pour la transmission de signaux à bande étroite et de signaux à large bande entre un abonné et un central, dans lequel les signaux à bande étroite et les signaux à large bande sont assemblés à l'émission par des multiplexeurs respectifs (SB-MUX, BB-MUX) travaillant en multiplexage temporel et transmis par un système à guide d'ondes lumineuses (E/O, LWL, O/E), dans lequel les signaux à bande étroite et les signaux à large bande sont récupérés à la réception par des démultiplexeurs (SB-DMUX, BB-DMUX) et dans lequel les équipements d'abonné, alimentés électriquement par le secteur, comportent un accumulateur de charge qui assure l'alimentation en cas de panne

3

**0 053 674**

de secteur, les équipement s étant commutables, en cas de panne de secteur, de manière que la transmission par le système à guide d'ondes lumineuses (LWL) s'effectue avec un débit binaire réduit, la transmission étant bidi rectionnelle, un canal de transmission optique séparé étant prévu dans le système à guide d'ondes lumineuses pour les signaux à bande étroite assemblés et un canal de transmission optique pour les signaux à large bande assemblés, les signaux optiques émis et les signaux optiques reçus étant assemblés respectivement séparés chaque fois par un coupleur directionnel (KS, KB) et les canaux de transmission optiques présentant côté émission une diode laser pour les signaux à large bande et une diode électroluminescente pour les signaux à bande étroite.

2. Système de transmission selon la revendication 1, caractérisé en ce que chaque canal de transmission optique uti lise un guide d'ondes lumineuses ou fibre optique (LWL) (figure 1).

3. Système de transmission selon la revendication 1, caractérisé en ce qu'un seul guide d'ondes lumineuses ou fibre optique est prévu pour les canaux de transmission optiques et que les signaux à large bande et les signaux à bande étroite sont assemblés respectivement séparés de nouveau par un coupléur di rectionnel (K) supplémentaire (figure 2).

4. Système de transmission selon la revendication 1, 2 ou 3, caractérisé en ce que le guide d'ondes lumineuses (LWL) est exploité en multiplexage de longueurs d'ondes.

5. Système de transmission selon la revendication 1, 2 ou 3, caractérisé en ce que le guide d'ondes lumineuses (LWL) est exploité en multiplexage temporel (procédé burst).

FIG.1

FIG.2